# EUROPEAN PATENT SPECIFICATION

(11) **EP 3 190 735 B1**
(45) Date of publication and mention of the grant of the patent: **02.10.2024**
(21) Application number: 15838629.2
(22) Date of filing: 14.08.2015
(51) Int. Cl.: H04L 1/18, H04L 1/00, H04L 1/06

(54) **METHOD AND DEVICE FOR DATA TRANSMISSION**
VERFAHREN UND VORRICHTUNG FÜR DATENÜBERTRAGUNG
PROCÉDÉ ET DISPOSITIF DE TRANSMISSION DE DONNÉES

(30) Priority: 01.09.2014 CN 201410441703
(43) Date of publication of application: 12.07.2017
(73) Proprietor: Datang Mobile Communications Equipment Co., Ltd., Beijing 100085 (CN)
(72) Inventor: CHEN, Li, Beijing 100191 (CN); JIAO, Bin, Beijing 100191 (CN); KANG, Shaoli, Beijing 100191 (CN); QIN, Fei, Beijing 100191 (CN)
(74) Representative: Cabinet Nony
(86) International application number: PCT/CN2015/086993
(87) International publication number: WO 2016/034041

(56) References cited:
- CN-A- 101 272 526
- CN-A- 102 118 434
- CN-A- 103 716 835
- US-A1- 2004 032 835
- US-A1- 2007 002 892
- US-A1- 2013 329 840
- US-A1- 2014 092 887
- US-B1- 6 959 048

## Description

This application claims priority to Chinese Patent Application No. 201410441703.8, filed with the Chinese Patent Office on September 01, 2014 and entitled "Method and device for transmitting data".

### Field

The present invention relates to the field of wireless communications, and particularly to a method and device for transmitting data.

### Background

With development of the mobile Internet and Internet of Things, there is an explosively growing demand for the amount of service data, and a great number of connected devices, and a great diversity of services over the Internet of Things also pose new technology challenges to mobile communication. The delay in and the reliability of an existing communication system has been designed for human-to-human communication, and a future wireless mobile communication system intended to further satisfy better the demand for communication between human users in terms of its delay and reliability also needs to accommodate real-time and highly reliable Machine Type Communication (MTC) as required so as to promote applications thereof in the industry fields of traffic security, traffic efficiency, intelligent power grids, etc., thus making the concept of our intelligent society and intelligent planet possible in the future. A shorter delay in and high reliability of the future wireless mobile communication system will be required in the new application fields thereof.

In the standard of Quality of Service (QoS) Class Identifier characteristics defined by the 3rd Generation Partnership Project (3GPP), generally there is no strict delay as required. Even the strictest delays as required are 100ms for a session application, and 50ms for a real-time game application.

However as new applications, e.g., remote industry control, augmented reality, etc., are emerging constantly, a shorter delay and high reliability of the wireless communication system has been required.

In the prior art, the reliability of transmission is guaranteed by retransmitting a data packet, and taking a Long Term Evolution (LTE) system as an example, there are physical layer Hybrid Automatic Repeat Request (HARQ), high-layer Automatic Repeat Request (ARQ), higher-layer, e.g., Internet Protocol (IP) layer, retransmission, and other technologies. The HARQ technology which relates to physical layer retransmission is such a technology to guarantee the reliability that has the shortest delay in the LTE system.

At present, the retransmission mechanisms in the LTE system can accommodate the general delay and reliability as required in the LTE specification, but these retransmission mechanisms may fail to accommodate a shorter delay and higher reliability as required in the new service applications.

Existing methods are disclosed in US 2014/092887 A1 (GUO CHANG J!E [CN] ET AL) 3 April 2014, US 2004/032835 A1 (MAJIDI-AHY REZA [US] ET AL) 19 February 2004, US 2007/002892 A1 (WAXMAN SHAY [IL]) 4 January 2007, and US 6 959 048 B1 (HORNEMAN KARI [FI] ET AL) 25 October 2005.

### Summary

Embodiments of the invention provide a method and device for transmitting data so as to address such a problem in the prior art that the retransmission mechanisms in the LTE system can accommodate the general delay and reliability as required in the LTE specification, but these retransmission mechanisms may fail to accommodate a shorter delay and higher reliability as required in the new service applications.

The invention is defined by the appended claims.

In the embodiments of the invention, the data are transmitted between the transmitting side and the receiving side over the multiple paths, over each of which the same data are transmitted, for the purpose of transmitting the data repeatedly for a number of times to thereby make full use of the different wireless channel connections, and guarantee the reliability in transmitting the data at the short delay as required.

### Brief Description of the Drawings

Fig.1 is a schematic flow chart of a method for transmitting data in accordance with a first embodiment of the invention;
Fig.2 is a schematic flow chart of a method for transmitting data in accordance with a second embodiment of the invention;
Fig.3 is a schematic flow chart of a method for transmitting data in accordance with a third embodiment of the invention;
Fig.4 is a schematic structural diagram of a first receiving unit in accordance with a fourth embodiment of the invention;
Fig.5 is a schematic structural diagram of a first data interface unit in accordance with a fifth embodiment of the invention;
Fig.6 is a schematic structural diagram of a second receiving unit in accordance with a sixth embodiment of the invention;
Fig.7 is a schematic structural diagram of a second interface unit in accordance with a seventh embodiment of the invention;
Fig.8 is a schematic structural diagram of a first transmitting unit in accordance with an eighth embodiment of the invention;
Fig.9 is a schematic structural diagram of a first data processing unit in accordance with a ninth embodiment of the invention;
Fig.10 is a schematic structural diagram of a second transmitting unit in accordance with a tenth embodiment of the invention;
Fig.11 is a schematic structural diagram of a second data processing unit in accordance with an eleventh embodiment of the invention;
Fig.12 is a schematic structural diagram of a control unit in accordance with a twelfth embodiment of the invention;
Fig.13 is a schematic structural diagram of a system for transmitting in the downlink in accordance with a thirteenth embodiment of the invention;
Fig.14 is a schematic structural diagram of a system for transmitting in the uplink in accordance with a fourth embodiment of the invention;
Fig.15 is a schematic diagram of a control unit controlling a plurality of wireless communication system centrally in accordance with a fifteenth embodiment of the invention;
Fig.16 is a schematic diagram of a control unit controlling a plurality of cells in a wireless communication system centrally in accordance with a sixteenth embodiment of the invention;
Fig.17 is a schematic diagram of starting transmission over multiple paths as a result of negotiation in accordance with a seventeen embodiment of the invention;
Fig.18 is a schematic diagram of a terminal controlling transmission over multiple paths in accordance with an eighteenth embodiment of the invention;
Fig.19 is a schematic diagram of a terminal transmitting with blind redundancy in accordance with a ninth embodiment of the invention;
Fig.20 is a schematic structural diagram of a base station in accordance with a twentieth embodiment of the invention;
Fig.21 is a schematic diagram of a first data interface unit in accordance with a twenty-first embodiment of the invention;
Fig.22 is a schematic diagram of a first data processing unit in accordance with a twenty-second embodiment of the invention;
Fig.23 is a schematic structural diagram of a terminal in accordance with a twenty-third embodiment of the invention;
Fig.24 is a schematic diagram of a second data interface unit in accordance with a twenty-fourth embodiment of the invention;
Fig.25 is a schematic diagram of a second data processing unit in accordance with a twenty-fifth embodiment of the invention; and
Fig.26 is a schematic diagram of a control unit in accordance with a twenty-sixth embodiment of the invention.

### Detailed Description

In the embodiments of the invention, data are transmitted over multiple paths between the transmitting side and the receiving side, over each of which the same data are transmitted, for the purpose of transmitting the data repeatedly for a number of times to thereby make full use of the different wireless channel connections, and guarantee the reliability in transmitting the data at the short delay as required.

The embodiments of the invention will be described below in further details with reference to the drawings.

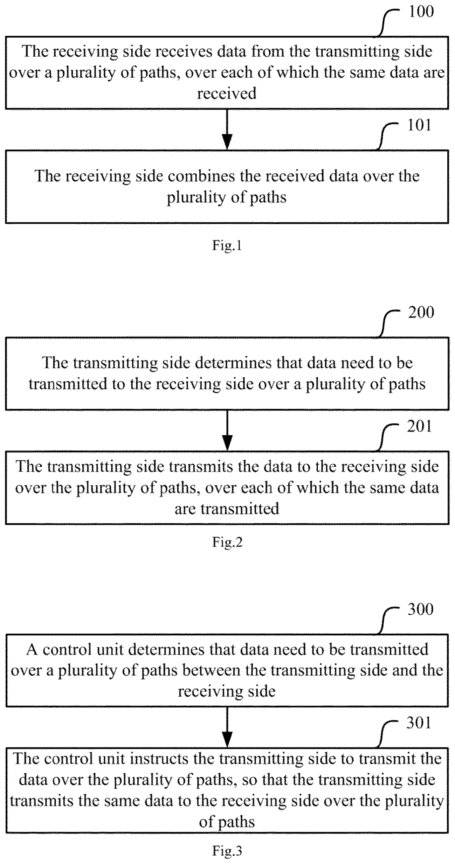

As illustrated in Fig.1, a method for transmitting data according to a first embodiment of the invention includes the following steps:
In the step 100, the receiving side receives data from the transmitting side over multiple paths, over each of which the same data are received; and
In the step 101, the receiving side combines the received data over the multiple paths.

If the data are transmitted in the uplink, then the transmitting side is the terminal side, and the receiving side is the network side; and
If the data are transmitted in the downlink, then the transmitting side is the network side, and the receiving side is the terminal side.

These two instances will be introduced below respectively.

The first instance relates to uplink transmission where the transmitting side is the terminal side, and the receiving side is the network side.

Particularly the receiving side includes a plurality of first receiving units participating in transmission over the multiple paths; and
The receiving side receives the data from the transmitting side over the multiple paths as follows:

Each first receiving unit receives the data from the transmitting side over respective one of the paths.

In the embodiment of the invention, each first receiving unit is connected with the transmitting side, and each first receiving unit receives the same data transmitted by the transmitting side over respective one of the paths for the purpose of transmitting the data repeatedly for a number of times to thereby make full use of the different wireless channel connections, and guarantee the reliability in transmitting the data at the short delay as required.

In an implementation, each of the first receiving units can be located in a base station or a cell of a wireless communication system.

If each of the first receiving units is located in a base station of a wireless communication system, then each first receiving unit is located in respective one of base stations, and the base stations including the first receiving units are located in the same wireless communication system; or the base stations are located in different wireless communication systems; or a part of the base stations are located in the same wireless communication system.

After each of the first receiving units receives the same data, the data over the multiple paths can be further combined. In an embodiment of the invention, a function of combining the data over the multiple paths can be centralized in some first receiving unit, or the function of combining the data over the multiple paths can be arranged in a new unit, as introduced below in details.

First scheme: the function of combining the data over the multiple paths is centralized in some first receiving unit.

Particularly each of the first receiving units transmits the received data to the same first receiving unit participating in transmission over the multiple paths, or the first receiving unit in a primary connection; and
The first receiving unit receiving the data transmitted by the other first receiving units combines the received data from the transmitting side with the received data from the other first receiving units over the multiple paths.

The primary connection (referred to a primary link) refers to a primary connection over which a user equipment communicates with the network side, where typically underlying control signaling is transmitted over the primary connection to keep the terminal connected, and control information related to transmission over the multiple paths may only be transmitted over the primary connection.

In an implementation, particularly the first receiving unit to combine the data over the multiple paths can be any one of the first receiving units, and each first receiving unit can negotiate about and determine to which first receiving unit the received data are currently transmitted. For example, lightly loaded one of the first receiving units can be selected as the first receiving unit to combine the data over the multiple paths, according to current loads of the first receiving units.

Optionally since each first receiving unit is connected with the transmitting side, in an implementation, one of the connections can be selected as the primary connection, where the first receiving unit corresponding to the connection is the first receiving unit in the primary connection, and each first receiving unit receiving the data can transmit the data to the first receiving unit in the primary connection, so that the first receiving unit in the primary connection combines the data over the multiple paths.

For different data, the data over the multiple paths can be combined by different schemes. Since not all the first receiving units can receive the complete data, whatever data over the multiple paths are combined for the purpose of obtaining the complete data in the embodiment of the invention. Stated otherwise, any scheme to obtain the complete data by combining the data over the multiple paths can be applicable to the embodiment of the invention.

The scheme according to the invention is to detect the received data for duplication.

Particularly there are different duplication detection schemes at different transport layers. According to the invention, if there are a plurality of duplicated data packets, then only one of them can be maintained while discarding the other duplicated data packets.

Optionally after the data are detected for duplication, the data packets can be further sorted by the identifiers of the data packets for convenient submission to a higher layer.

In the first scheme, there is further provided a feedback upon reception of a plurality of pieces of data in an embodiment of the invention.

Particularly for a data packet in the data, the one of the first receiving units which is connected with the transmitting side over the primary connection receives the data packet, and instructs the transmitting side to stop the data packet from being transmitted, when a part or all of the following conditions are satisfied:
At least one of the first receiving units receives correctly the data packet of the transmitting side, or the first receiving unit receiving the data transmitted by the other first receiving units determines that the data packet is received correctly, after combining the data over the multiple paths;
A part or all of the first receiving units have received the same data packet of the transmitting side for such a number of times that reaches the largest number of transmissions; and
The data packet transmitted by the transmitting side is received at such a delay that reaches the longest transmission delay.

Second scheme: the function of combining the data over the multiple paths is arranged in a new unit.

Particularly each first receiving unit transmits the received data to a first data interface unit in the receiving side; and
The first data interface unit combines the received data from the plurality of first receiving units over the multiple paths.

For different data, the data over the multiple paths can be combined by different schemes. Since not all the first receiving units can receive the complete data, whatever data over the multiple paths are combined for the purpose of obtaining the complete data in the embodiment of the invention. Stated otherwise, any scheme to obtain the complete data by combining the data over the multiple paths can be applicable to the embodiment of the invention.

The scheme according to the invention is to detect the received data for duplication.

Particularly there are different duplication detection schemes at different transport layers. According to the invention, if there are a plurality of duplicated data packets, then only one of them can be maintained while discarding the other duplicated data packets.

Optionally after the data are detected for duplication, the data packets can be further sorted by the identifiers of the data packets for convenient submission to a higher layer.

In an implementation, the first data interface unit and the first receiving unit can be located in the same entity, or can be located in different entities.

If the first data interface unit and the first receiving unit can be located in different entities, then the first data interface unit in the embodiment of the invention has a powerful capability to process data rapidly, and is connected with the first receiving unit rapidly and reliably (e.g., in a wired mode over a short distance), where one first data interface unit can be connected with a plurality of first receiving units.

In the second scheme, there is further provided a feedback upon reception of a plurality of pieces of data in an embodiment of the invention.

Particularly for a data packet in the data, the one of the first receiving units which is connected with the transmitting side over the primary connection, or the first data interface unit receives the data packet, and instructs the transmitting side to stop the data packet from being transmitted, when a part or all of the following conditions are satisfied;
At least one of the first receiving units receives correctly the data packet of the transmitting side, or the first data interface unit determines that the data packet is received correctly, after combining the data over the multiple paths;
A part or all of the first receiving units have received the same data packet of the transmitting side for such a number of times that reaches the largest number of transmissions; and
The data packet transmitted by the transmitting side is received at such a delay that reaches the longest transmission delay.

The second instance relates to downlink transmission where the transmitting side is the network side, and the receiving side is the terminal side.

Particularly the receiving side includes one second data interface unit and one second receiving unit; and
The receiving side receives the data from the transmitting side over the multiple paths as follows:
The second data interface unit receives the data from the transmitting side over the multiple paths;
The receiving side combines the received data over the multiple paths as follows:
   The second data interface unit combines the received data over the multiple paths; and
   After the receiving side combines the received data over the multiple paths, the method further includes:
      The second data interface unit transmits the combined data over the multiple paths to the second receiving unit.

For downlink transmission, there are typically one second data interface unit and one second receiving unit in an implementation.

Typically the second data interface unit receives a plurality of pieces of the same data over the multiple paths, and then combines these data over the multiple paths.

For different data, the data over the multiple paths can be combined by different schemes. Since the second data interface unit may not receive the complete data over each path, whatever data over the multiple paths are combined for the purpose of obtaining the complete data in the embodiment of the invention. Stated otherwise, any scheme to obtain the complete data by combining the data over the multiple paths can be applicable to the embodiment of the invention.

The scheme according to the invention is to detect the received data for duplication.

Particularly there are different duplication detection schemes at different transport layers. According to the invention, if there are a plurality of duplicated data packets, then only one of them can be maintained while discarding the other duplicated data packets.

Optionally after the data are detected for duplication, the data packets can be further sorted by the identifiers of the data packets for convenient submission to a higher layer.

In an implementation, the second data interface unit and the second receiving unit are located in a terminal, and the terminal is capable of receiving and combining the data by itself.

However for a less capable terminal, the second data interface unit can alternatively be arranged separately in an entity in an embodiment of the invention, so that a plurality of terminals can be connected with the second data interface unit, so that the second data interface unit combines the data over the multiple paths, and then transmits the processed data to the corresponding terminal. Stated otherwise, the second data interface unit and the second receiving unit are located in different entities, and the second receiving unit is located in the terminal.

If the second data interface unit and the second receiving unit are located in different entities, and the second receiving unit is located in a terminal, then the second data interface unit in the embodiment of the invention will have a powerful capability to process data rapidly, and be connected with the terminal rapidly and reliably (e.g., in a wired mode over a short distance), where one second data interface unit can be connected with a plurality of terminals.

There is further provided a feedback upon reception of a plurality of pieces of data in an embodiment of the invention.

Particularly for a data packet in the data, the second data interface unit or the second receiving unit instructs the transmitting side to stop the data packet from being transmitted, when a part or all of the following conditions are satisfied;
The second data interface unit determines that the data packet is received correctly, after combining the data over the multiple paths;
The same data packet from the transmitting side over one of the paths or all the paths has been received for such a number of times that reaches the largest number of transmissions; and
The data packet from the transmitting side is received at such a delay that reaches the longest transmission delay.

As illustrated in Fig.2, a method for transmitting data according to a second embodiment of the invention includes the following steps:
In the step 200, the transmitting side determines that data need to be transmitted to the receiving side over multiple paths; and
In the step 201, the transmitting side transmits the data to the receiving side over the multiple paths, over each of which the same data are transmitted.

If the data are transmitted in the downlink, then the transmitting side is the network side, and the receiving side is the terminal side; and
If the data are transmitted in the uplink, then the transmitting side is the terminal side, and the receiving side is the network side.

These two instances will be introduced below respectively.

The first instance relates to downlink transmission where the transmitting side is the network side, and the receiving side is the terminal side.

Particularly the transmitting side includes a plurality of first transmitting units participating in transmission over the multiple paths; and
The transmitting side transmits the data to the receiving side over the multiple paths as follows:
Each first transmitting unit transmits the same data to the receiving side over respective one of the paths.

In the embodiment of the invention, each first transmitting unit is connected with the receiving side, and each first transmitting unit transmits the same data to the receiving side over respective one of the paths for the purpose of transmitting the data repeatedly for a number of times to thereby make full use of the different wireless channel connections, and guarantee the reliability in transmitting the data at the short delay as required.

In an implementation, each of the first transmitting units can be located in a base station or a cell of a wireless communication system.

If each of the first transmitting units is located in a base station of a wireless communication system, then each first transmitting unit can be located in respective one of base stations, and the base stations including the first transmitting units can be located in the same wireless communication system; or the base stations can be located in different wireless communication systems; or a part of the base stations can be located in the same wireless communication system.

Each of the first transmitting units backs up the data for the multiple paths before transmitting the same data. In an embodiment of the invention, a function of backing up the data for the multiple paths can be centralized in a first data processing unit.

Particularly the first data processing unit in the transmitting side backs up the data to be transmitted for the multiple paths, and transmits a plurality of duplicated data packets obtained as a result of backing up respectively to the respective first transmitting units.

The data can be backed up by backing-up, encoding jointly, etc., the data. For example, the first data processing unit duplicates the data to be transmitted into a plurality of copies, each of which is transmitted over one of the transmission paths; or the first data processing unit network-encodes the data to be transmitted into copies, each of which is transmitted over respective one of the paths, and the receiving side combines and encodes the data transmitted over the multiple paths thus further improving the reliability in transmitting the data.

In an implementation, the first data processing unit and the first transmitting units can be located in the same entity, or can be located in different entities.

If they are located in the same entity, then a plurality of first data processing units can be arranged, where only one of the first data processing units processes the data, and then transmits the processed data respectively to the first transmitting units in the other entities.

If they are located in different entities, then only one first data processing unit can be arranged, where the first data processing unit processes the data, and then transmits the processed data respectively to the first transmitting units in the other entities.

If the first data processing unit and the first transmitting units are located in different entities, then the first data processing unit in the embodiment of the invention will have a powerful capability to process data rapidly, and be connected with the first transmitting unit rapidly and reliably (e.g., in a wired mode over a short distance), where one first data processing unit can be connected with a plurality of first transmitting units.

Optionally the transmitting side stops the data from being transmitted over all the paths, upon reception of a feedback from the receiving side that the data are received correctly or stopped from being transmitted.

For example, the first data processing unit instructs the other first data processing units to stop the data from being processed, and the data from being transmitted over their transmission paths, upon reception of the feedback from the receiving side that the data are received correctly or stopped from being transmitted.

The second instance relates to uplink transmission where the transmitting side is the terminal side, and the receiving side is the network side.

Particularly the transmitting side includes one second data processing unit and one second transmitting unit;
Before the transmitting side transmits the data to the receiving side over the multiple paths, the method further includes:
The second transmitting unit transmits the data to be transmitted, to the second data processing unit; and
The transmitting side transmits the data to the receiving side over the multiple paths as follows:
   The second data processing unit backs up the received data for the multiple paths, and transmits a plurality of duplicated data packets obtained as a result of backing up to the receiving side respectively over the multiple paths.

The data can be backed up by backing-up, encoding jointly, etc., the data. For example, the second data processing unit duplicates the data to be transmitted into a plurality of copies, each of which is transmitted over one of the transmission paths; or the second data processing unit network-encodes the data to be transmitted into copies, each of which is transmitted over respective one of the paths, and the receiving side combines and encodes the data transmitted over the multiple paths thus further improving the reliability in transmitting the data.

In an implementation, the second data processing unit and the second transmitting unit are located in a terminal capable of backing up and transmitting the data over the multiple paths by itself.

However for a less capable terminal, the second data processing unit can alternatively be arranged separately in an entity in an embodiment of the invention, so that a plurality of terminals can be connected with the second data interface unit, and transmit the data to be transmitted, to the second data processing unit. For a terminal, the second data interface unit backs up the data transmitted by the terminal for the multiple paths, and transmits the processed data to the receiving side over the multiple paths. Stated otherwise, the second data processing unit and the second transmitting unit are located in different entities, and the second transmitting unit is located in the terminal.

If the second data processing unit and the second transmitting unit are located in different entities, and the second transmitting unit is located in a terminal, then the second data processing unit in the embodiment of the invention has a powerful capability to process data rapidly, and be connected with the terminal rapidly and reliably (e.g., in a wired mode over a short distance), where one second data transmitting unit can be connected with a plurality of terminals.

Optionally the transmitting side stops the data from being transmitted over all the paths, upon reception of a feedback from the receiving side that the data are received correctly or stopped from being transmitted.

For example, the second data processing unit stops the data from being transmitted over their transmission paths, upon reception of the feedback from the receiving side that the data are received correctly or stopped from being transmitted.

As illustrated in Fig.3, a method for transmitting data according to a third embodiment of the invention includes the following steps:
In the step 300, a control unit determines that data need to be transmitted over multiple paths between the transmitting side and the receiving side; and
In the step 301, the control unit instructs the transmitting side to transmit the data over the multiple paths, so that the transmitting side transmits the same data to the receiving side over the multiple paths.

If the data are transmitted in the uplink, then the transmitting side is the terminal side, and the receiving side is the network side; and
If the data are transmitted in the downlink, then the transmitting side is the network side, and the receiving side is the terminal side.

The control unit determines that the data need to be transmitted over multiple paths between the transmitting side and the receiving side as follows:
If the transmitting side is the terminal side, then the control unit determines the data need to be transmitted over multiple paths, according to the performance of the transmitting side, and/or a service to be transmitted; and
If the receiving side is the terminal side, then the control unit determines the data need to be transmitted over multiple paths, according to the performance of the receiving side, and/or a service to be transmitted.

For example, the control unit can start transmission over the multiple paths because transmission through a primary connection system fails to accommodate the performance of the receiving side, or the reliability and a delay as required for the service.

Optionally after the control unit determines that the data need to be transmitted over the multiple paths, the method further includes:
The control unit instructs the receiving side to transmit the data over the multiple paths, so that the receiving side receives the same data respectively over the different paths.

For example, the control unit instructs the transmitting side and the receiving side to participate in transmission over the multiple paths, and notifies them of various configured parameters for transmission over the multiple paths (e.g., a feedback mode, the number of retransmissions, etc.), by interacting with the transmitting side and the receiving side via signaling.

Optionally after the control unit determines that the data need to be transmitted over the multiple paths between the transmitting side and the receiving side, and before the control unit instructs the transmitting side to transmit the data over the multiple paths, the method further includes:
The control unit selects such ones of the paths between the transmitting side and the receiving side that can accommodate a required delay, as paths for transmission between the transmitting side and the receiving side over the multiple paths, and determines the transmitting side and the receiving side corresponding to the transmission paths.

Optionally the control unit is located in the transmitting side or the receiving side, or is a separate unit entity.

The structures of the respective units as described above will be described below in details.

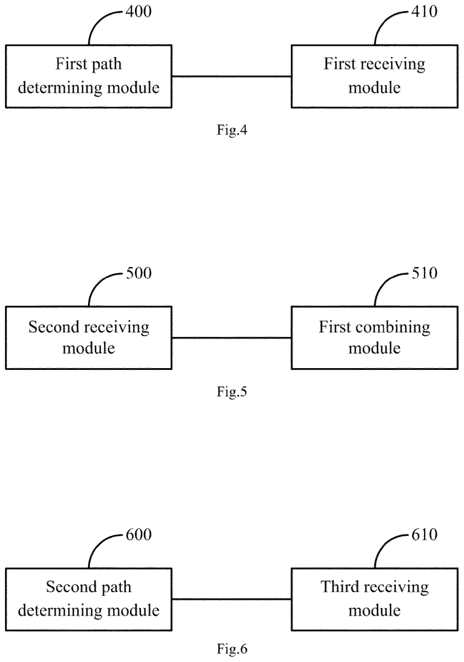

As illustrated in Fig.4, a first receiving unit according to a fourth embodiment of the invention includes:
A first path determining module 400 is configured to determine paths to the transmitting side; and
A first receiving module 410 is configured to receive data from the transmitting side over the determined paths together with other first receiving units, where the same data are received over the respective paths.

Optionally each of the first receiving units 410 is located in a base station or a cell of a wireless communication system.

Optionally the first receiving module 410 is further configured:
To transmit the received data to a first data interface unit, so that the first data interface unit combines the received data from the plurality of first receiving units over the multiple paths.

Optionally the first receiving module 410 is further configured:
For a data packet in the data, to instruct the transmitting side to stop the data packet from being transmitted, when a part or all of the following conditions are satisfied:
At least one of the first receiving units receives correctly the data packet of the transmitting side, or the first data interface unit determines that the data packet is received correctly, after combining the data over the multiple paths;
A part or all of the first receiving units have received the same data packet from the transmitting side for such a number of times that reaches the largest number of transmissions; and
The data packet from the transmitting side is received at such a delay that reaches the longest transmission delay.

As illustrated in Fig.5, a first data interface unit according to a fifth embodiment of the invention includes:
A second receiving module 500 is configured to receive data from a plurality of first receiving units, where the data of each first receiving unit are data received from the transmitting side over a different path, and the same data are transmitted over each path; and
A first combining module 510 is configured to combine the received data from the plurality of first receiving units over the multiple paths.

Optionally each of the first receiving units is located in a base station or a cell of a wireless communication system.

Optionally the first data interface unit and the first receiving unit are located in the same entity or different entities.

As illustrated in Fig.6, a second receiving unit according to a sixth embodiment of the invention includes:
A second path determining module 600 is configured to determine paths to a second data interface unit; and
A third receiving module 610 is configured to receive first specific data from the second data interface unit over the determined paths, where the first specific data are obtained by the second data interface unit combining data received over multiple paths, over each of which the same data are transmitted.

Optionally the third receiving module 610 is further configured:
For a data packet in the data, to instruct the transmitting side to stop the data packet from being transmitted, when a part or all of the following conditions are satisfied:
The second data interface unit determines that the data packet is received correctly, after combining the data over the multiple paths;
The same data packet from the transmitting side over one of the paths or all the paths has been received for such a number of times that reaches the largest number of transmissions; and
The data packet transmitted from the transmitting side is received at such a delay that reaches the longest transmission delay.

Optionally the second data interface unit and the second receiving unit are located in a terminal; or
The second data interface unit and the second receiving unit are located in different entities, and the second receiving unit is located in a terminal.

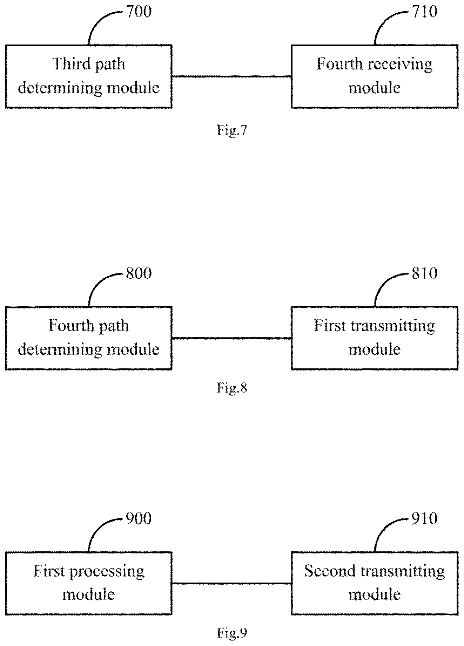

As illustrated in Fig.7, a second data interface unit according to a seventh embodiment of the invention includes:
A third path determining module 700 is configured to determine multiple paths to the transmitting side; and
A fourth receiving module 710 is configured to receive data from the transmitting side over the determined multiple paths, to combine the received data over the multiple paths, and to transmit the combined data to a second receiving unit, where the same data are received over the respective paths.

Optionally the fourth receiving module 710 is further configured:
For a data packet in the data, to instruct the transmitting side to stop the data packet from being transmitted, when a part or all of the following conditions are satisfied:
The second data interface unit determines that the data packet is received correctly, after combining the data over the multiple paths;
The same data packet from the transmitting side over one of the paths or all the paths has been received for such a number of times that reaches the largest number of transmissions; and
The data packet from the transmitting side is received at such a delay that reaches the longest transmission delay.

Optionally the second data interface unit and the second receiving unit are located in a terminal; or
The second data interface unit and the second receiving unit are located in different entities, and the second receiving unit is located in a terminal.

As illustrated in Fig.8, a first transmitting unit according to an eighth embodiment of the invention includes:
A fourth path determining module 800 is configured to determine paths to the receiving side; and
A first transmitting module 810 is configured to transmit data to the receiving side over the determined paths together with other first transmitting modules, where the same data are transmitted over the respective paths.

Optionally each of the first transmitting unit is located in a base station or a cell of a wireless communication system.

Optionally the first transmitting module 810 is further configured:
To receive second specific data from a first data processing unit, and to determine the second specific data as data to be transmitted, where the second specific data are obtained by the first data processing unit backing up the data to be transmitted, for the multiple paths.

As illustrated in Fig.9, a first data processing unit according to a ninth embodiment of the invention includes:
A first processing module 900 is configured to back up data to be transmitted, for multiple paths; and
A second transmitting module 910 is configured to transmit the processed data respectively to respective first transmitting units, so that the respective first transmitting units transmit the same data to the receiving side respectively over the respective different paths.

Optionally each of the first transmitting units is located in a base station or a cell of a wireless communication system.

Optionally the first data processing unit and the first transmitting unit are located in the same entity or different entities.

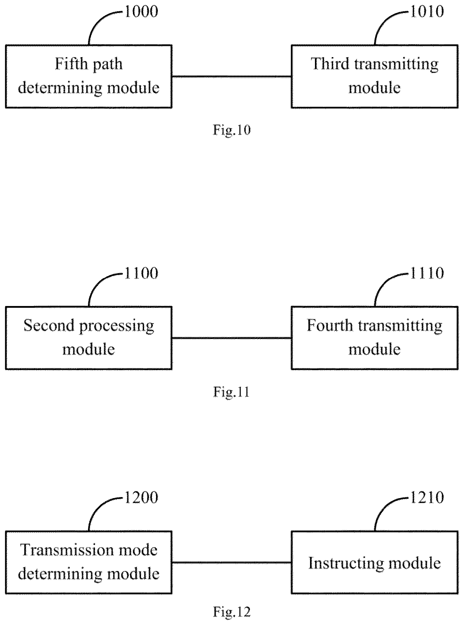

As illustrated in Fig.10, a second transmitting unit according to a tenth embodiment of the invention includes:
A fifth path determining module 1000 is configured to determine paths to a second data processing unit; and
A third transmitting module 1010 is configured to transmit data to the second data processing unit over the determined paths, so that the second data processing unit backs up the received data for multiple paths, and transmits a plurality of duplicated data packets obtained as a result of backing up to the receiving side respectively over the multiple paths.

Optionally the second data processing unit and the second transmitting unit are located in a terminal; or

The second data processing unit and the second transmitting unit are located in different entities, and the second transmitting unit is located in a terminal.

As illustrated in Fig.11, a second data processing unit according to an eleventh embodiment of the invention includes:
A second processing module 1100 is configured to back up received data from a second transmitting unit for multiple paths; and
A fourth transmitting module 1100 is configured to transmit a plurality of duplicated data packets obtained as a result of backing up to the receiving side respectively over the multiple paths.

Optionally the second data processing unit and the second transmitting unit are located in a terminal; or
The second data processing unit and the second transmitting unit are located in different entities, and the second transmitting unit is located in a terminal.

As illustrated in Fig.12, a control unit according to a twelfth embodiment of the invention includes:
A transmission mode determining module 1200 is configured to determine that data need to be transmitted between the transmitting side and the receiving side over multiple paths; and
An instructing module 1210 is configured to instruct the transmitting side to transmit over the multiple paths, so that the transmitting side transmits the same data to the receiving side over the multiple paths.

Optionally the transmission mode determining module 1200 is configured:
If the transmitting side is the terminal side, to determine that the data need to be transmitted over the multiple paths, according to the performance of the transmitting side, and/or a service to be transmitted; and
If the receiving side is the terminal side, to determine that the data need to be transmitted over the multiple paths, according to the performance of the receiving side, and/or a service to be transmitted.

Optionally the instructing module 1210 is further configured:
To instruct the receiving side to receive over the multiple paths, so that the receiving side receives the same data respectively over the different paths.

Optionally the transmission mode determining module 1200 is further configured:
To select such ones of the paths between the transmitting side and the receiving side that can accommodate a required delay, as the paths for multipath transmission between the transmitting side and the receiving side, and to determine the transmitting side and the receiving side corresponding to the transmission paths.

Optionally the control unit is located in the transmitting side or the receiving side, or is a separate unit entity.

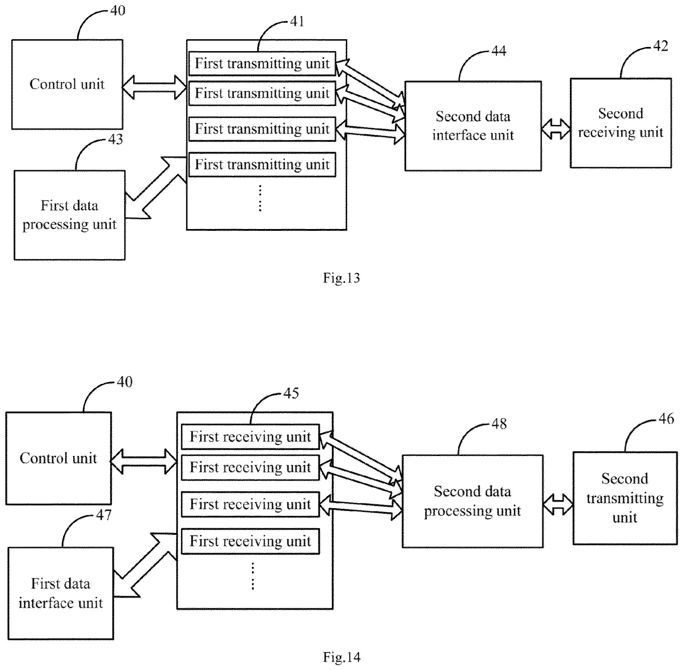

As illustrated in Fig.13, a system for downlink transmission according to a thirteenth embodiment of the invention includes a control unit 40, a first transmitting unit 41, a second receiving unit 42, a first data processing unit 43, and a second data interface unit 44.

Reference can be made to the respective embodiments above for particular functions of the respective units above, so a repeated description thereof will be omitted here.

As illustrated in Fig. 14, a system for uplink transmission according to a fourteenth embodiment of the invention includes a control unit 40, a first receiving unit 45, a second transmitting unit 46, a first data interface unit 47, and a second data processing unit 48.

Reference can be made to the respective embodiments above for particular functions of the respective units above, so a repeated description thereof will be omitted here.

The solution according to the embodiments of the invention will be further described below in connection with several examples thereof.

In a first example, the control unit centrally controls a plurality of wireless communication systems.

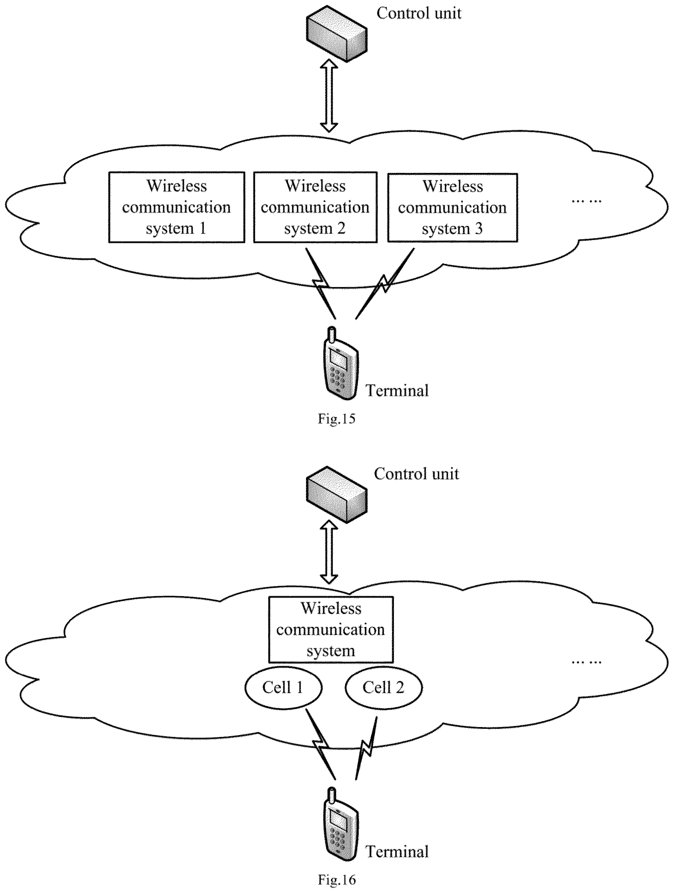

As illustrated in Fig. 15 which is a schematic diagram of a control unit centrally controlling a plurality of wireless communication systems according to a fifteenth embodiment of the invention, the control unit can be located in some wireless communication system (e.g., a 5G wireless communication system, and particularly some network node (e.g., a gateway (GW)) or a base station in a core network of the 5G wireless communication system); or some node (e.g., a PDN GW (PGW)) or a base station in a core network of an existing wireless communication system), or can be a separate entity.

In downlink transmission, wireless communication systems 2 and 3 transmit, and a terminal receives; and
In uplink transmission, the terminal transmits, and the wireless communication systems 2 and 3 receive.

In the first step, the control unit determines the type of the terminal, or a service to be transmitted for the terminal, and the reliability and a delay as required for the terminal, and selects those wireless communication systems which can satisfy the required delay in one or more transmissions, e.g., the wireless communication systems 2 and 3 as illustrated in Fig.15.

In the second step, the control unit notifies or negotiates with the selected wireless communication systems, and the wireless communication systems decide to participate in transmission over multiple paths.

In the third step, the control unit or the selected wireless communication systems notifies or notify the terminal of which wireless communication systems are to participate in transmission over the multiple paths, and the terminal prepares for transmission over the multiple paths, such as setup connection, synchronization, etc.

In the fourth step, the plurality of wireless communication systems transmit service data for the terminal.

In downlink transmission, when higher-layer service data of the network side (e.g., service data from an IP network) is arrived, then the selected wireless communication systems (e.g., the wireless communication system 2 and the wireless communication system 3) transmit service data packets respectively to the terminal. The wireless communication system 2 and the wireless communication system 3 can transmit separately from each other, or can interact with each other via related signaling and data.

In uplink transmission, when service data arrive, then the terminal transmits the same service data to all the selected wireless communication systems (e.g., the wireless communication system 2 and the wireless communication system 3).

In the fifth step, the receiving side receives and processes the data, including detecting the data for duplication.

In downlink transmission, the terminal receives data packets from the plurality of wireless communication systems, and detects the data packets for duplication, and sorts the data packets (optionally the terminal detects the data packets over the different transmission paths, and if there are a plurality of same data packets, then the terminal maintains only one of them while discarding the other duplicated data packets; and thereafter the terminal sorts the data packets by the identifiers of the data packets for convenient submission to a higher layer).

Optionally the terminal can make a necessary feedback to thereby reduce the number of duplicated transmissions so as to avoid resources from being wasted. For example, the terminal transmits correct reception feedbacks to both the wireless communication system 2 and the wireless communication system 3, or only one of the wireless communication systems, upon accurate reception of a data packet, and in the latter case, the wireless communication systems can interact with each other via signaling to stop transmission.

In uplink transmission, the wireless communication systems 2 and 3 receive uplink data packets separately from each other, and notify the terminal upon correct reception thereof or after the largest number of transmissions and/or the longest transmission delay is reached.

Preferably the data received by the wireless communication systems 2 and 3 can be combined (by one of the wireless communication systems, or the control unit), and the terminal can be notified after the data are received correctly.

In a second example, the control unit controls a plurality of cells in a wireless communication system.

As illustrated in Fig. 16 which is a schematic diagram of a control unit centrally controlling a plurality of cells in a wireless communication system according to a sixteenth embodiment of the invention, the control unit can be a node in the wireless communication system, e.g., a base station or a core network node, or can be a separate entity.
In downlink transmission, cells 1 and 2 transmit, and a terminal receives;
In uplink transmission, the terminal transmits, and the cells 1 and 2 receive.

In the first step, the control unit determines the type of the terminal, or a service to be transmitted for the terminal, and the reliability and a delay as required for the terminal, and selects a plurality of cells to participate in transmission over multiple paths, e.g., the cell 1 and the cell 2 as illustrated in Fig. 16.

In the second step, the control unit interacts with the base station and the terminal via signaling to notify the base station and the terminal of the cells to participate in transmission over the multiple paths, and various parameters for transmission over the multiple paths (e.g., a feedback mode, the number of retransmissions, etc.)

In the third step, the plurality of cells transmit service data for the terminal.

In downlink transmission, when service data arrive, then the selected cells (e.g., the cell 1 and the cell 2) transmit service data packets to the terminal. The cell 1 and the cell 2 can be controlled by the same node (e.g., the base station), or different nodes (e.g., base stations).

In uplink transmission, when service data arrive, then the terminal transmits the same service data to all the selected cells.

In the fourth step, the receiving side receives and processes the data, including detecting the data for duplication.

In downlink transmission, the terminal receives data packets from the plurality of cells, and detects the data packets for duplication, and sorts the data packets (optionally the terminal detects the data packets over the different transmission paths, and there are a plurality of duplicated data packets, then the terminal will maintain only one of them while discarding the other duplicated data packets; and thereafter the terminal sorts the data packets by the identifiers of the data packets for convenient submission to a higher layer).

Optionally the terminal can make a necessary feedback to thereby reduce the number of duplicated transmissions so as to avoid resources from being wasted. For example, the terminal transmits correct reception feedbacks to both the cell 2 and the cell 3, or only one of the cells, upon accurate reception of a data packet.

In uplink transmission, the cells 1 and 2 receive uplink data packets separately from each other, and notify the terminal upon correct reception thereof or after the largest number of transmissions and/or the longest delay is reached.

Preferably the data received by the cells 1 and 2 can be combined, and the terminal can be notified after the data are received correctly.

In a third example, transmission over a plurality of path is started as a result of negotiation.

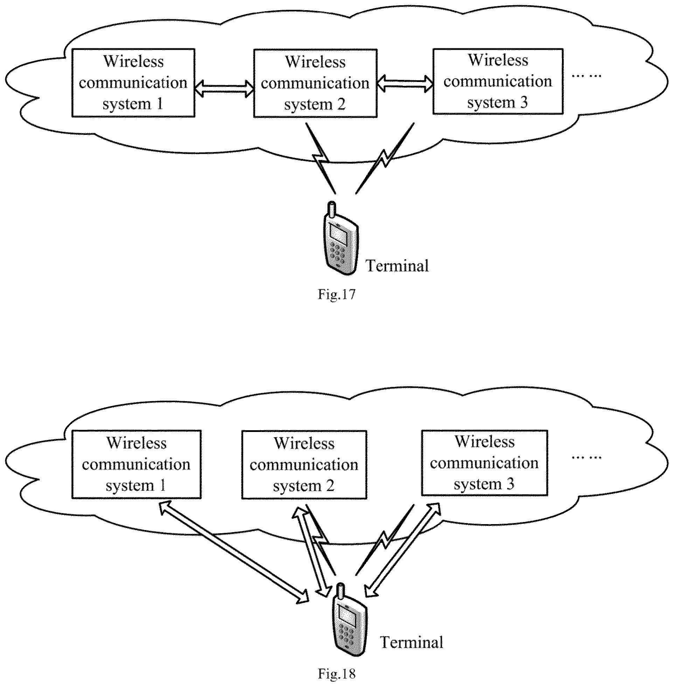

As illustrated in Fig. 17 which is a schematic diagram of starting transmission over a plurality of path as a result of negotiation according to a seventeenth embodiment of the invention, a control unit is one of wireless communication systems, which can be referred to as a primary connection system, and the control unit can be located on some core network entity (e.g., a GW) or a base station of the primary connection system.

In downlink transmission, wireless communication systems 2 and 3 transmit, and a terminal receives; and
In uplink transmission, the terminal transmits, and the wireless communication systems 2 and 3 receive.

In the first step, the wireless communication system 2 is the primary connection system of the terminal, which is referred to as a Primary Radio Access Technology (PRAT) system, e.g., the wireless communication system 2 as illustrated in Fig.17. The primary connection system determines the reliability and a delay as required for the terminal or a service, and determines whether to start transmission over multiple paths (for example, if transmission through the primary connection system fails to satisfy the reliability and the delay as required for the terminal or the service, then transmission over the multiple paths can be started), and if it is determined to start transmission over multiple paths, then the primary connection system selects those wireless communication systems with transmission paths satisfying the required delay to participate in transmission over the multiple paths (e.g., the wireless communication system 2 and the wireless communication system 3 as illustrated in Fig. 17).

In the second step, the primary connection system interacts with the selected wireless communication systems via signaling (generally request and acknowledgement or request and rejection signaling) to determine the wireless communication systems to participate in transmission over the multiple paths, e.g., the wireless communication systems 2 and 3 to participate in transmission over the multiple paths as a result of negotiation in Fig. 17.

In the third step, the primary connection system (the wireless communication system 2) instructs the terminal to start transmission over the multiple paths, and notifies the terminal of necessary information about transmission over the multiple paths, e.g., the wireless communication system to participate in transmission over the multiple paths; and the terminal prepares for transmission over the multiple paths, such as setup connection, synchronization, etc.

In the fourth step, the plurality of wireless communication systems transmit service data for the terminal.

In downlink transmission, when higher-layer service data of the network side (e.g., service data from an IP network) is arrived, then the selected wireless communication systems (e.g., the wireless communication system 2 and the wireless communication system 3) can transmit service data packets respectively to the terminal. The wireless communication system 2 and the wireless communication system 3 can transmit separately from each other, or can interact with each other via related signaling and data.

In uplink transmission, when service data arrive, then the terminal can transmit the same service data to all the selected wireless communication systems (e.g., the wireless communication system 2 and the wireless communication system 3).

In the fifth step, the receiving side receives and processes the data, including detecting the data for duplication.

In downlink transmission, the terminal receives data packets from the plurality of wireless communication systems, and detects the data packets for duplication, and sorts the data packets (optionally the terminal detects the data packets over the different transmission paths, and if there are a plurality of same data packets, then the terminal maintains only one of them while discarding the other duplicated data packets; and thereafter the terminal sorts the data packets by the identifiers of the data packets for convenient submission to a higher layer).

Optionally the terminal can make a necessary feedback to thereby reduce the number of duplicated transmissions so as to avoid resources from being wasted. For example, the terminal transmits correct reception feedbacks to both the wireless communication system 2 and the wireless communication system 3, or only one of the wireless communication systems, upon accurate reception of a data packet, and in the latter case, the wireless communication systems can interact with each other via signaling to stop transmission.

In uplink transmission, the wireless communication systems 2 and 3 receive uplink data packets separately from each other, and notify the terminal upon correct reception thereof or after the largest number of transmissions and/or the longest transmission delay is reached. Preferably the data received by the wireless communication systems 2 and 3 can be combined (by one of the wireless communication systems, or an intermediary unit), and the terminal can be notified after the data are received correctly.

In a fourth example, a terminal controls transmission over multiple paths.

As illustrated in Fig.18 which is a schematic diagram of a terminal controlling transmission over multiple paths to an eighteenth embodiment of the invention, a control unit is the terminal.

In downlink transmission, wireless communication systems 2 and 3 transmit, and the terminal receives; and
In uplink transmission, the terminal transmits, and the wireless communication systems 2 and 3 receive.

In the first step, the terminal decides to transmit over multiple paths while guaranteeing a delay and the reliability, according to a delay and the reliability as required for the terminal or some service, and selects wireless communication systems likely to participate in transmission over the multiple paths.

In the second step, the terminal is connected with the plurality of wireless communication systems, and requests for transmission over the multiple paths. The wireless communication systems respond. For example, the wireless communication system 2 and the wireless communication system 3 as illustrated in Fig.18 can participate in transmission over the multiple paths.

In the third step, the plurality of wireless communication systems transmit service data for the terminal.

In downlink transmission, when higher-layer service data of the network side (e.g., service data from an IP network) arrive, then the selected wireless communication systems (e.g., the wireless communication system 2 and the wireless communication system 3) can transmit service data packets respectively to the terminal. The wireless communication system 2 and the wireless communication system 3 can transmit separately from each other, or can interact with each other via related signaling and data.

In uplink transmission, when service data arrive, then the terminal can transmit the same service data to all the selected wireless communication systems (e.g., the wireless communication system 2 and the wireless communication system 3).

In the fourth step, the receiving side receives and processes the data, including detecting the data for duplication.

In downlink transmission, the terminal receives data packets from the plurality of wireless communication systems, and detects the data packets for duplication, and sorts the data packets (optionally the terminal detects the data packets over the different transmission paths, and if there are a plurality of duplicated data packets, then the terminal maintains only one of them while discarding the other duplicated data packets; and thereafter the terminal sorts the data packets by the identifiers of the data packets for convenient submission to a higher layer).

Optionally the terminal can make a necessary feedback to thereby reduce the number of duplicated transmissions so as to avoid resources from being wasted. For example, the terminal transmits correct reception feedbacks to both the wireless communication system 2 and the wireless communication system 3, or only one of the wireless communication systems, upon accurate reception of a data packet, and in the latter case, the wireless communication systems can interact with each other via signaling to stop transmission.

In uplink transmission, the wireless communication systems 2 and 3 receive uplink data packets separately from each other, and notify the terminal upon correct reception thereof or after the largest number of transmissions and/or the longest transmission delay is reached.

Preferably the data received by the wireless communication systems 2 and 3 can be combined (by one of the wireless communication systems, or an intermediary unit), and the terminal can be notified after the data are received correctly.

In a fifth example, terminals guarantee an end-to-end delay and reliability through blindly redundant transmission.

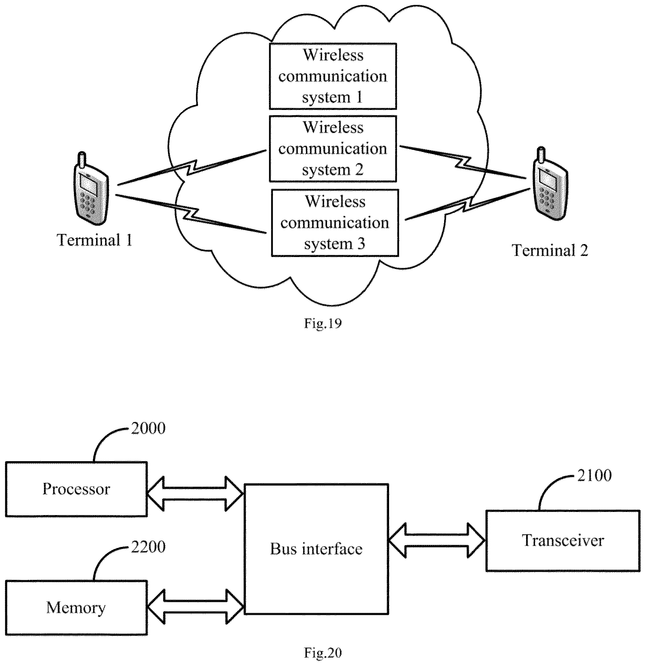

As illustrated in Fig.19 which is a schematic diagram of a terminal transmitting in a blindly redundant mode according to a nineteenth embodiment of the invention, a control unit is the terminal.

In downlink transmission, wireless communication systems 2 and 3 transmit, and terminals receive; and
In uplink transmission, the terminals transmit, and the wireless communication systems 2 and 3 receive.

In the first step, the terminal 1 decides to transmit over multiple paths while guaranteeing a delay and the reliability, according to a delay and the reliability as required for the terminal or some service. The terminal can make a general decision, and select wireless communication systems likely to participate in transmission over the multiple paths.

In the second step, the terminal 1 transmits the same service data to the selected plurality of wireless communication systems. Transmission over the multiple paths is transparent to the wireless communication systems participating in transmission over the multiple paths, that is, the participating wireless communication systems do not know that they participate in transmission over the multiple paths.

In the third step, the terminal 2 receives the transmitted service data from the plurality of wireless communication systems, detects the data, combines the data, detects the data for duplication, and sorts the data.

Preferably the terminals can alternatively negotiate in advance about and determine their connected wireless communication systems, and select those wireless communication systems from them to participate in transmission over multiple paths.

The third, fourth, and fifth embodiments of the invention can also be applicable to transmission over multiple paths in a plurality cells in a wireless communication system.

As illustrated in Fig.20, a base station according to a twentieth embodiment of the invention includes a processor 2000, a transceiver 2100, and a memory 2200, where:
The transceiver 2100 is configured to be controlled by the processor 2000 to transmit and receive data; and
The memory 2200 is configured to store data for use by the processor 2000 in operation.

If the base station is a receiver, then the processor 2000 can be configured to read programs in the memory, and to perform the processes of:
Determining paths to the transmitting side; and
Receiving data from the transmitting side through the transceiver 2100 over the determined paths together with other base stations, where the same data are received over each of the paths.

If the base station is a transmitter, then the processor 2000 can be configured to read the data in the memory, and to perform the processes of:
Determining paths to the receiving side; and
Transmitting data from the receiving side through the transceiver 2100 over the determined paths together with other base stations, where the same data are transmitted over each of the paths.

In Fig.20, the bus architecture can include any number of interconnected buses and bridges to link together various circuits including one or more processors represented by the processor 2000, and one or more memories represented by the memory 2200. The bus architecture can further link together various other circuits, e.g., peripheral devices, a voltage stabilizer, a power management circuit, etc., and all of these circuits are well known in the art, so a further description thereof will be omitted in this context. The bus interface provides an interface. The transceiver 2100 can include a number of elements, e.g., a transmitter and a receiver, configured to provide units for communication with various other devices over a transmission medium. The processor 2000 is responsible for managing the bus architecture and typical processes, and the memory 2200 can store data to be used by the processor 2000 in operation.

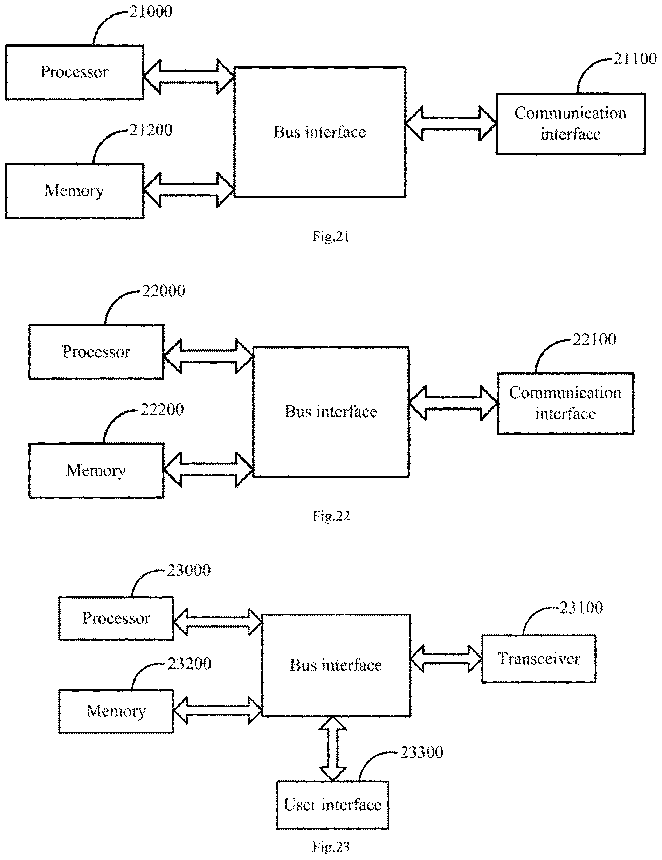

As illustrated in Fig.21, a first data interface unit for transmitting data according to a twenty-first embodiment of the invention includes a processor 21000, a communication interface 21100, and a memory 21200, where:
The processor 21000 is configured to read programs in the memory 21200, and to perform the processes of:
Receiving data from a plurality of base stations via the communication interface 21100, where the data of each base station are data from the transmitting side over different one of paths, over each of which the same data are transmitted; and
Combining the received data from the plurality of base stations over the multiple paths;
The communication interface 21100 is configured to be controlled by the processor 21000 to transmit data to other entities at the network side, and to be controlled by the processor 21000 to receive data transmitted by the other entities at the network side; and
The memory 21200 is configured to store data for use by the processor 21000 in operation.

In Fig.21, the bus architecture can include any number of interconnected buses and bridges to link together various circuits including one or more processors represented by the processor 21200, and one or more memories represented by the memory 21200. The bus architecture can further link together various other circuits, e.g., peripheral devices, a voltage stabilizer, a power management circuit, etc., and all of these circuits are well known in the art, so a further description thereof will be omitted in this context. The bus interface provides an interface. The processor 21000 is responsible for managing the bus architecture and typical processes, and the memory 21200 can store data to be used by the processor 21000 in operation.

As illustrated in Fig.22, a first data processing unit for transmitting data according to a twenty-second embodiment of the invention includes a processor 22000, a communication interface 22100, and a memory 22200, where:
The processor 22000 is configured to read data from the memory 22200, and to perform the processes of:
Backing up data to be transmitted, for multiple paths; and
Transmitting the processed data respectively to respective first transmitting units via the communication interface 22100, so that the respective first transmitting units transmit the same data to the receiving side respectively over the respective different paths.

In Fig.22, the bus architecture can include any number of interconnected buses and bridges to link together various circuits including one or more processors represented by the processor 22000, and one or more memories represented by the memory 22200. The bus architecture can further link together various other circuits, e.g., peripheral devices, a voltage stabilizer, a power management circuit, etc., and all of these circuits are well known in the art, so a further description thereof will be omitted in this context. The bus interface provides an interface. The processor 22000 is responsible for managing the bus architecture and typical processes, and the memory 22200 can store data to be used by the processor 22000 in operation.

The communication interface 22100 is configured to be controlled by the processor 22000 to transmit data to other entities at the network side, and to be controlled by the processor 22000 to receive data transmitted by the other entities at the network side; and
The memory 22200 is configured to store data for use by the processor 22000 in operation.

As illustrated in Fig.23, a terminal according to a twenty-third embodiment of the invention includes a processor 23000, a memory 23200, and a transceiver 23100, where:
The memory 23200 is configured to store data for use by the processor 23000 in operation; and
The transceiver 23100 is configured to be controlled by the processor 23000 to transmit and receive data.

If the terminal is a receiver, then the processor 23000 can be configured to read programs in the memory 23200, and to perform the processes of:
Receiving data from the transmitting side over multiple paths, over each of which the same data are transmitted; and
Combining the received data over the multiple paths.

If the terminal is a transmitter, then the processor 23000 can be configured to read programs in the memory 23200, and to perform the processes of:
Deciding to transmit with the receiving side over multiple paths; and
Transmitting data to the receiving side through the transceiver 23100 over the multiple paths, over each of which the same data are transmitted.

In Fig.23, the bus architecture can include any number of interconnected buses and bridges to link together various circuits including one or more processors represented by the processor 23000, and one or more memories represented by the memory 23200. The bus architecture can further link together various other circuits, e.g., peripheral devices, a voltage stabilizer, a power management circuit, etc., and all of these circuits are well known in the art, so a further description thereof will be omitted in this context. The bus interface provides an interface. The transceiver 23100 can include a number of elements, e.g., a transmitter and a receiver, configured to provide units for communication with various other devices over a transmission medium. For different user equipments, the user interface 23300 can also be an interface via which external or internal devices are connected as appropriate, where the connected devices include but will not be limited to a keypad, a display, a speaker, a microphone, a joystick, etc.

The processor 23000 is responsible for managing the bus architecture and typical processes, and the memory 23200 can store data to be used by the processor 23000 in operation.

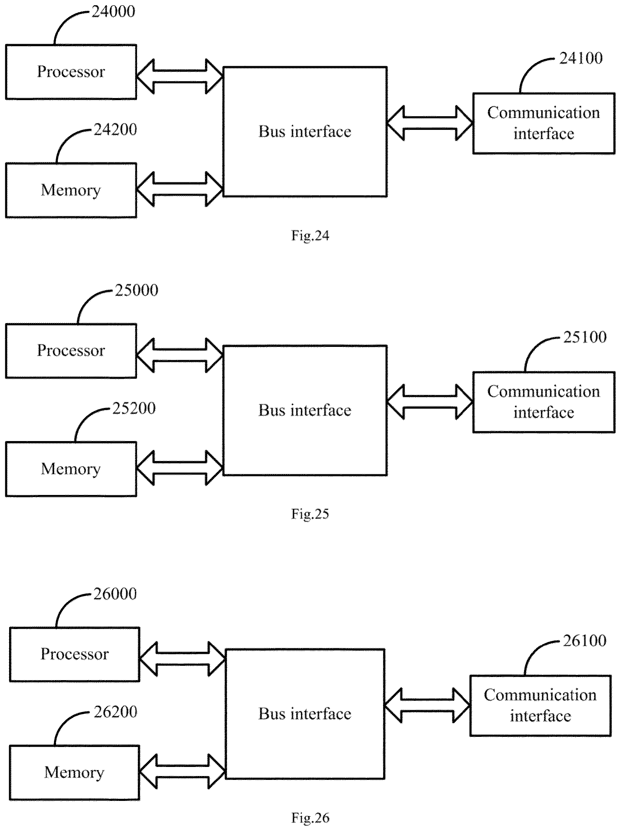

As illustrated in Fig.24, a second data interface unit for transmitting data according to a twenty-fourth embodiment of the invention includes a processor 24000, a memory 24200, and a communication interface 24100, where:
The processor 24000 is configured to read programs in the memory 24200, and to perform the processes of:
Determining multiple paths to the transmitting side; and
Receiving data from the transmitting side over the determined multiple paths, combining the received data over the multiple paths, and transmitting the combined data to a second receiving unit via the communication interface, where the same data are received over each of the paths;
The memory 24200 is configured to store data for use by the processor 24000 in operation; and

The communication interface 24100 is configured to be controlled by the processor 24000 to receive data of a terminal, and to be controlled by the processor 24000 to transmit data to the terminal.

In Fig.24, the bus architecture can include any number of interconnected buses and bridges to link together various circuits including one or more processors represented by the processor 24000, and one or more memories represented by the memory 24200. The bus architecture can further link together various other circuits, e.g., peripheral devices, a voltage stabilizer, a power management circuit, etc., and all of these circuits are well known in the art, so a further description thereof will be omitted in this context. The bus interface provides an interface. The processor 24000 is responsible for managing the bus architecture and typical processes, and the memory 24200 can store data to be used by the processor 24000 in operation.

As illustrated in Fig.25, a second data processing unit for transmitting data according to a twenty-fifth embodiment of the invention includes a processor 25000, a memory 25200, and a communication interface 25100, where:
The processor 25000 is configured to read program in the memory 25200, and to perform the processes of:
Backing up data, received via the communication interface 25100 from a terminal, for multiple paths; and
Transmitting a plurality of duplicated data packets obtained as a result of backing up to the receiving side respectively over the multiple paths.

In Fig.25, the bus architecture can include any number of interconnected buses and bridges to link together various circuits including one or more processors represented by the processor 25000, and one or more memories represented by the memory 25200. The bus architecture can further link together various other circuits, e.g., peripheral devices, a voltage stabilizer, a power management circuit, etc., and all of these circuits are well known in the art, so a further description thereof will be omitted in this context. The bus interface provides an interface. The processor 25000 is responsible for managing the bus architecture and typical processes, and the memory 25200 can store data to be used by the processor 25000 in operation.

As illustrated in Fig.26, a control unit for transmitting data according to a twenty-sixth embodiment of the invention includes:
A processor 26000 is configured to read programs in a memory 26200, and to perform the processes of:
Determining that data need to be transmitted between the transmitting side and the receiving side over multiple paths; and
Instructing the transmitting side via a communication interface 26100 to transmit over the multiple paths, so that the transmitting side transmits the same data to the receiving side over the multiple paths;
The memory 26200 is configured to store data for use by the processor 26000 in operation; and

The communication interface 26100 is configured to be controlled by the processor 26000 to exchange data with the transmitting side and the receiving side.

In Fig.26, the bus architecture can include any number of interconnected buses and bridges to link together various circuits including one or more processors represented by the processor 26000, and one or more memories represented by the memory 26200. The bus architecture can further link together various other circuits, e.g., peripheral devices, a voltage stabilizer, a power management circuit, etc., and all of these circuits are well known in the art, so a further description thereof will be omitted in this context. The bus interface provides an interface. The processor 26000 is responsible for managing the bus architecture and typical processes, and the memory 26200 can store data to be used by the processor 26000 in operation.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the claims. Thus the invention is also intended to encompass these modifications and variations thereto so long as the modifications and variations come into the scope of the claims appended.

## Claims

1. A communication method, comprising:
receiving, by a receiving side, from a control unit, a notification of which wireless communication systems are to participate in data transmission over respective multiple paths, wherein the wireless communication systems are determined to participate in the data transmission according to a delay as required for a terminal;
receiving, by the receiving side, data from a transmitting side over the respective multiple paths, over each of which the same data are received; and
combining, by the receiving side, the received data over the multiple paths; wherein the combining, by the receiving side, the received data over the multiple paths comprises:
detecting received data for duplication, and in response to there being a plurality of the same data, retaining only one of the same data and discarding the other duplicated data

2. The method according to claim 1, wherein the receiving side is a network side, and the receiving side comprises a plurality of first receiving units in a data transmission over the multiple paths; and
receiving, by the receiving side, the data from the transmitting side over the multiple paths comprises:
receiving, by each of the first receiving units, the data from the transmitting side over respective one of the paths;
wherein each of the first receiving units is located in a base station or a cell of a wireless communication system.

3. The method according to claim 2, wherein combining, by the receiving side, the received data over the multiple paths comprises:
providing, by each of the first receiving units, the received data to one of the first receiving units in the data transmission over the multiple paths, or the first receiving unit in a primary connection; wherein the primary connection is a link over which a user equipment communicates with the network side; and
combining, by the one of the first receiving unit, the received data from the transmitting side with the received data from rest of the first receiving units except for the one of the first receiving units over the multiple paths;
or,
wherein the receiving side comprises a first data interface unit configured to combine data, the combining, by the receiving side, the received data over the multiple paths comprises:
providing, by each of the first receiving units, the receive data to a first data interface unit in the receiving side; and
combining, by the first data interface unit, the received data from the plurality of first receiving units over the multiple paths.

4. The method according to claim 3, wherein the method further comprises:
for a data packet in the data, receiving, by one of the first receiving units which is connected with the transmitting side by the primary connection, or the first data interface unit, the data packet, and instructing the transmitting side to stop the data packet from being transmitted, when a part or all of the following conditions are satisfied;
at least one of the first receiving units receives correctly the data packet of the transmitting side, or the first data interface unit determines that the data packet is received correctly, after combining the data over the multiple paths;
a part or all of the first receiving units have received the same data packet from the transmitting side for such a number of times that reaches a largest number of transmissions; and
the data packet transmitted from the transmitting side is received at such a delay that reaches a longest transmission delay.

5. The method according to claim 1, wherein the receiving side is a terminal side, and the receiving side comprises one second data interface unit and one second receiving unit;
receiving, by the receiving side, the data from the transmitting side over the multiple paths comprises:
receiving, by the second data interface unit, the data from the transmitting side over the multiple paths;
combining, by the receiving side, the received data over the multiple paths comprises:
combining, by the second data interface unit, the received data over the multiple paths; and
after the receiving side combines the received data over the multiple paths, the method further comprises:
transmitting, by the second data interface unit, the combined data to the second receiving unit.

6. The method according to claim 5, wherein the method further comprises:
for a data packet in the data, instructing, by the second data interface unit or the second receiving unit, the transmitting side to stop the data packet from being transmitted, when a part or all of the following conditions are satisfied;
the second data interface unit determines that the data packet is received correctly, after combining the data over the multiple paths;
the same data packet from the transmitting side over one of the paths or all the paths has been received for such a number of times that reaches a largest number of transmissions; and
the data packet transmitted from the transmitting side is received at such a delay that reaches a longest transmission delay.

7. The method according to claim 5 or 6, wherein:
the second data interface unit and the second receiving unit are located in a terminal; or
the second data interface unit and the second receiving unit are located in different entities, and the second receiving unit is located in a terminal.

8. A communication method, comprises:
determining, by a transmitting side, that data need to be transmitted to a receiving side over multiple paths;
determining, by a control unit, wireless communication systems to participate in data transmission over the respective multiple paths according to a delay as required for a terminal;
selecting, by the control unit, the wireless communication systems which satisfy the delay to participate in the data transmission over the respective multiple paths; and
notifying, by the control unit, the receiving side of the wireless communication systems to participate in the data transmission; and
transmitting, by the transmitting side, the data to the receiver side over the respective multiple paths, over each of which the same data are transmitted.

9. The method according to claim 8, wherein the transmitting side is a network side, and the transmitting side comprises a plurality of first transmitting units in a data transmission over the multiple paths; and
transmitting, by the transmitting side, the data to the receiving side over the multiple paths comprises:
transmitting, by each of the first transmitting units, the same data to the receiving side over respective one of the paths;
wherein each of the first transmitting units is located in a base station or a cell of a wireless communication system.

10. The method according to claim 9, wherein before the transmitting side transmits the data to the receiving side over the multiple paths, the method further comprises:
backing up, by a first data processing unit in the transmitting side, the data to be transmitted, and transmitting a plurality of duplicated data packets obtained as a result of backing up respectively to the respective first transmitting units.

11. The method according to claim 8, wherein the transmitting side is a terminal side, and the transmitting side comprises one second data processing unit and one second transmitting unit;
before the transmitting side transmits the data to the receiving side over the multiple paths, the method further comprises:
transmitting, by the second transmitting unit, the data to be transmitted, to the second data processing unit; and
transmitting, by the transmitting side, the data to the receiving side over the multiple paths comprises:
backing up, by the second data processing unit, the received data for the multiple paths, and transmitting a plurality of duplicated data packets obtained as a result of backing up to the receiving side respectively over the multiple paths.

12. The method according to claim 11, wherein:
the second data processing unit and the second transmitting unit are located in a terminal; or
the second data processing unit and the second transmitting unit are located in different entities, and the second transmitting unit is located in the terminal.

13. The method according to any one of claims 8 to 12, wherein after the transmitting side transmits the data to the receiving side over the multiple paths, the method further comprises:
stopping, by the transmitting side, the data from being transmitted over all the paths, upon reception of a feedback from the receiving side that the data are received correctly or stopped from being transmitted.

14. A control unit, comprising:
a transmission mode determining module (1200) configured to determine that data need to be transmitted over multiple paths between a transmitting side and a receiving side; and
an instructing module (1210) configured to instruct the transmitting side to transmit the data over the multiple paths, so that the transmitting side transmits the same data to the receiving side over the multiple paths;
wherein the transmission mode determining module (1200) is configured:
if the transmitting side is a terminal side, to determine that the data need to be transmitted over multiple paths, according to the performance of the transmitting side, and/or a service to be transmitted; or
if the receiving side is the terminal side, to determine that the data need to be transmitted over multiple paths, according to the performance of the receiving side, and/or a service to be transmitted;
the transmission mode determining module (1200) is further configured to:
determine wireless communication systems to participate in the data transmission over the respective multiple paths J according to a delay as required for the terminal side;
select the wireless communication systems which satisfy the delay to participate in the data transmission over the respective multiple paths; and
notify the receiving side of the wireless communication systems.

15. The control unit according to claim 14, wherein the instructing module (1210) is further configured to:
instruct the receiving side to receive the data over the multiple paths, so that the receiving side receives the same data respectively over the different paths; or
wherein the instructing module (1210) is further configured to:
the select such ones of paths between the transmitting side and the receiving side that can accommodate required delay, as paths for transmission between the transmitting side and the receiving side over the multiple paths, and determining the transmitting side and the receiving side corresponding to the transmission paths; and/or
wherein the control unit is located in the transmitting side or the receiving side, or is a separate unit entity.

## Patentansprüche

1. Kommunikationsverfahren, das Folgendes umfasst:
Empfangen, durch eine Empfangsseite, von einer Steuereinheit, einer Benachrichtigung darüber, welche drahtlosen Kommunikationssysteme an der Datenübertragung über jeweilige Mehrfachpfade teilnehmen sollen, wobei die drahtlosen Kommunikationssysteme bestimmt werden, an der Datenübertragung gemäß einer Verzögerung, wie sie für ein Endgerät erforderlich ist, teilzunehmen;
Empfangen, durch die Empfangsseite, von Daten von einer Sendeseite über die jeweiligen Mehrfachpfade, über die jeweils die gleichen Daten empfangen werden; und
Kombinieren, durch die Empfangsseite, der empfangenen Daten über die Mehrfachpfade;
wobei das Kombinieren, durch die Empfangsseite, der empfangenen Daten über die Mehrfachpfade Folgendes umfasst:
Erkennen der empfangenen Daten auf Duplizierung, und als Reaktion auf das Vorhandensein einer Vielzahl der gleichen Daten, Beibehalten nur eines der gleichen Daten und Verwerfen der anderen duplizierten Daten.

2. Verfahren nach Anspruch 1, wobei die Empfangsseite eine Netzwerkseite ist und die Empfangsseite eine Vielzahl von ersten Empfangseinheiten bei einer Datenübertragung über die Mehrfachpfade umfasst; und wobei das Empfangen, durch die Empfangsseite, der Daten von der Sendeseite über die Mehrfachpfade Folgendes umfasst:
Empfangen, durch jede der ersten Empfangseinheiten, der Daten von der Sendeseite über jeweils einen der Pfade;
wobei jede der ersten Empfangseinheiten in einer Basisstation oder einer Zelle eines Drahtloskommunikationssystems lokalisiert ist.

3. Verfahren nach Anspruch 2, wobei das Kombinieren, durch die Empfangsseite, der empfangenen Daten über die Mehrfachpfade Folgendes umfasst:
Bereitstellen, durch jede der ersten Empfangseinheiten, der empfangenen Daten an eine der ersten Empfangseinheiten in der Datenübertragung über die Mehrfachpfade, oder der ersten Empfangseinheit in einer primären Verbindung; wobei die primäre Verbindung eine Verbindung ist, über die eine Benutzerausrüstung mit der Netzwerkseite kommuniziert; und
Kombinieren, durch die eine der ersten Empfangseinheiten, der empfangenen Daten von der Sendeseite mit den empfangenen Daten von den restlichen ersten Empfangseinheiten, mit Ausnahme der einen der ersten Empfangseinheiten, über die Mehrfachpfade;
oder
wobei die Empfangsseite eine erste Datenschnittstelleneinheit umfasst, die ausgebildet ist, um Daten zu kombinieren, wobei das Kombinieren, durch die Empfangsseite, der empfangenen Daten über die Mehrfachpfade Folgendes umfasst:
Bereitstellen, durch jede der ersten Empfangseinheiten, der empfangenen Daten an eine erste Datenschnittstelleneinheit auf der Empfangsseite; und
Kombinieren, durch die erste Datenschnittstelleneinheit, der empfangenen Daten von der Vielzahl der ersten Empfangseinheiten über die Mehrfachpfade.

4. Verfahren nach Anspruch 3, wobei das Verfahren ferner Folgendes umfasst:
für ein Datenpaket in den Daten, Empfangen, durch eine der ersten Empfangseinheiten, die mit der Sendeseite durch die primäre Verbindung verbunden ist, oder die erste Datenschnittstelleneinheit, des Datenpakets und Anweisen der Sendeseite, die Übertragung des Datenpakets zu stoppen, wenn ein Teil oder alle der folgenden Bedingungen erfüllt sind:
mindestens eine der ersten Empfangseinheiten empfängt das Datenpaket der Sendeseite korrekt, oder die erste Datenschnittstelleneinheit bestimmt den korrekten Empfang des Datenpakets, nachdem sie die Daten über die Mehrfachpfade kombiniert hat;
ein Teil oder alle der ersten Empfangseinheiten haben dasselbe Datenpaket von der Sendeseite so oft empfangen, dass eine maximale Anzahl von Übertragungen erreicht wird; und
das von der Sendeseite übertragene Datenpaket wird mit einer solchen Verzögerung empfangen, dass die längste Sendeverzögerung erreicht wird.

5. Verfahren nach Anspruch 1, wobei die Empfangsseite eine Endgeräteseite ist und die Empfangsseite eine zweite Datenschnittstelleneinheit und eine zweite Empfangseinheit umfasst;
wobei das Empfangen, durch die Empfangsseite, der Daten von der Sendeseite über die Mehrfachpfade Folgendes umfasst:
Empfangen, durch die zweite Datenschnittstelleneinheit, der Daten von der Sendeseite über die Mehrfachpfade;
wobei das Kombinieren, durch die Empfangsseite, der empfangenen Daten über die Mehrfachpfade Folgendes umfasst:
Kombinieren, durch die zweite Datenschnittstelleneinheit, der empfangenen Daten über die Mehrfachpfade; und
nachdem die Empfangsseite die empfangenen Daten über die Mehrfachpfade kombiniert hat, umfasst das Verfahren ferner Folgendes:
Übertragen, durch die zweite Datenschnittstelleneinheit, der kombinierten Daten an die zweite Empfangseinheit.

6. Verfahren nach Anspruch 5, wobei das Verfahren ferner Folgendes umfasst:
für ein Datenpaket in den Daten, Anweisen, durch die zweite Datenschnittstelleneinheit oder die zweite Empfangseinheit, der Sendeseite, die Übertragung des Datenpakets zu stoppen, wenn ein Teil oder alle der folgenden Bedingungen erfüllt sind:
die zweite Datenschnittstelleneinheit bestimmt, dass das Datenpaket korrekt empfangen wurde, nachdem sie die Daten über die Mehrfachpfade kombiniert hat;
dasselbe Datenpaket ist von der Sendeseite über einen der Pfade oder alle Pfade so oft empfangen worden, dass eine maximale Anzahl von Übertragungen erreicht wird; und
das von der Sendeseite übertragene Datenpaket wird mit einer solchen Verzögerung empfangen, dass die längste Sendeverzögerung erreicht wird.

7. Verfahren nach Anspruch 5 oder 6, wobei:
die zweite Datenschnittstelleneinheit und die zweite Empfangseinheit in einem Endgerät lokalisiert sind; oder
die zweite Datenschnittstelleneinheit und die zweite Empfangseinheit in verschiedenen Einheiten lokalisiert sind, und die zweite Empfangseinheit in einem Endgerät lokalisiert ist.

8. Kommunikationsverfahren, das Folgendes umfasst:
Bestimmen, durch eine Sendeseite, dass Daten über Mehrfachpfade an eine Empfangsseite übertragen werden müssen;
Bestimmen, durch eine Steuereinheit, von Drahtloskommunikationssystemen zur Teilnahme an der Datenübertragung über die jeweiligen Mehrfachpfade gemäß einer für ein Endgerät erforderlichen Verzögerung;
Auswählen, durch die Steuereinheit, der Drahtloskommunikationssysteme, die die Verzögerung erfüllen, um an der Datenübertragung über die jeweiligen Mehrfachpfade teilzunehmen; und
Benachrichtigen, durch die Steuereinheit, der Empfangsseite der Drahtloskommunikationssysteme, sich an der Datenübertragung zu beteiligen; und
Übertragen, durch die Sendeseite, der Daten an die Empfangsseite über die jeweiligen Mehrfachpfade, über die jeweils die gleichen Daten übertragen werden.

9. Verfahren nach Anspruch 8, wobei die Sendeseite eine Netzwerkseite ist und die Sendeseite eine Vielzahl von ersten Sendeeinheiten bei einer Datenübertragung über die Mehrfachpfade umfasst; und
wobei das Übertragen, durch die Sendeseite, der Daten an die Empfangsseite über die Mehrfachpfade Folgendes umfasst:
Übertragen, durch jede der ersten Sendeeinheiten, der gleichen Daten an die Empfangsseite über jeweils einen der Pfade;
wobei jede der ersten Sendeeinheiten in einer Basisstation oder einer Zelle eines Drahtloskommunikationssystems lokalisiert ist.

10. Verfahren nach Anspruch 9, wobei das Verfahren, bevor die Sendeseite die Daten über die Mehrfachpfade an die Empfangsseite überträgt, ferner Folgendes umfasst:
Sichern, durch eine erste Datenverarbeitungseinheit auf der Sendeseite, der zu übertragenden Daten, und Übertragen einer Vielzahl von duplizierten Datenpaketen, die als Ergebnis des Sicherns erhalten wurden, an die jeweiligen ersten Sendeeinheiten.

11. Verfahren nach Anspruch 8, wobei die Sendeseite eine Endgeräteseite ist und die Sendeseite eine zweite Datenverarbeitungseinheit und eine zweite Sendeeinheit umfasst;
wobei das Verfahren, bevor die Sendeseite die Daten über die Mehrfachpfade an die Empfangsseite überträgt, ferner Folgendes umfasst:
Übertragen, durch die zweite Sendeeinheit, der zu übertragenden Daten an die zweite Datenverarbeitungseinheit; und
wobei das Übertragen, durch die Sendeseite, der Daten an die Empfangsseite über die Mehrfachpfade Folgendes umfasst:
Sichern, durch die zweite Datenverarbeitungseinheit, der empfangenen Daten für die Mehrfachpfade, und Übertragen einer Vielzahl von duplizierten Datenpaketen, die als Ergebnis des Sicherns erhalten wurden, an die Empfangsseite jeweils über die Mehrfachpfade.

12. Verfahren nach Anspruch 11, wobei:
die zweite Datenverarbeitungseinheit und die zweite Sendeeinheit in einem Endgerät lokalisiert sind; oder
die zweite Datenverarbeitungseinheit und die zweite Sendeeinheit in verschiedenen Einheiten lokalisiert sind und die zweite Sendeeinheit im Endgerät lokalisiert ist.

13. Verfahren nach einem der Ansprüche 8 bis 12, wobei das Verfahren, nachdem die Sendeseite die Daten über die Mehrfachpfade an die Empfangsseite übertragen hat, ferner Folgendes umfasst:
Stoppen, durch die Sendeseite, der Übertragung der Daten über alle Pfade, bei Empfang einer Rückmeldung von der Empfangsseite, dass die Daten korrekt empfangen werden oder ihre Übertragung gestoppt wird.

14. Steuereinheit, die Folgendes umfasst:
ein Übertragungsmodus-Bestimmungsmodul (1200), das ausgebildet ist, um zu bestimmen, dass Daten über Mehrfachpfade zwischen einer Sendeseite und einer Empfangsseite übertragen werden müssen; und
ein Anweisungsmodul (1210), das ausgebildet ist, um die Sendeseite anzuweisen, die Daten über die Mehrfachpfade zu übertragen, so dass die Sendeseite die gleichen Daten über die Mehrfachpfade an die Empfangsseite überträgt;
wobei das Übertragungsmodus-Bestimmungsmodul (1200) für Folgendes ausgebildet ist:
falls die Sendeseite eine Endgeräteseite ist, Bestimmen, dass die Daten über Mehrfachpfade übertragen werden müssen, und zwar je nach der Leistung der Sendeseite und/oder eines zu übertragenden Dienstes; oder
falls die Empfangsseite die Endgeräteseite ist, Bestimmen, dass die Daten über Mehrfachpfade übertragen werden müssen, und zwar je nach der Leistung der Empfangsseite und/oder eines zu übertragenden Dienstes;
wobei das Übertragungsmodus-Bestimmungsmodul (1200) ferner für Folgendes ausgebildet ist:
Bestimmen von Drahtloskommunikationssystemen zur Teilnahme an der Datenübertragung über die jeweiligen Mehrfachpfade gemäß einer für die Endgeräteseite erforderlichen Verzögerung;
Auswählen der Drahtloskommunikationssysteme, die die Verzögerung erfüllen, um an der Datenübertragung über die jeweiligen Mehrfachpfade teilzunehmen; und
Benachrichtigen der Empfangsseite der Drahtloskommunikationssysteme.

15. Steuereinheit nach Anspruch 14, wobei das Anweisungsmodul (1210) ferner für Folgendes ausgebildet ist:
Anweisen der Empfangsseite, die Daten über die Mehrfachpfade zu empfangen, so dass die Empfangsseite die gleichen Daten jeweils über die verschiedenen Pfade empfängt; oder
wobei das Anweisungsmodul (1210) ferner für Folgendes ausgebildet ist:
Auswählen solcher Pfade zwischen der Sendeseite und der Empfangsseite, die die erforderliche Verzögerung aufnehmen können, als Pfade für die Übertragung zwischen der Sendeseite und der Empfangsseite über die Mehrfachpfade, und Bestimmen der Sendeseite und der Empfangsseite, die den Übertragungspfaden entsprechen; und/oder
wobei die Steuereinheit auf der Sendeseite oder der Empfangsseite lokalisiert ist oder eine separate Einheit darstellt.

## Revendications

1. Procédé de communication, comprenant :
la réception, par un côté réception, en provenance d'une unité de commande, d'une notification indiquant quels systèmes de communication sans fil doivent participer à une transmission de données sur des chemins multiples respectifs, la participation des systèmes de communication sans fil à la transmission de données étant déterminée en fonction d'un délai tel que requis pour un terminal ;
la réception, par le côté réception, de données provenant d'un côté émission sur les chemins multiples respectifs, sur chacun desquels sont reçues les mêmes données ; et
la combinaison, par le côté réception, des données reçues sur les chemins multiples ;
la combinaison, par le côté réception, des données reçues sur les chemins multiples comprenant :
la détection de duplication de données reçues, et en réponse au fait qu'il y a une pluralité de données identiques, la conservation d'une seule des données identiques et la suppression des autres données dupliquées.

2. Procédé selon la revendication 1, dans lequel le côté réception est un côté réseau, et le côté réception comprend une pluralité de premières unités réceptrices sur une transmission de données sur les chemins multiples ; et
la réception, par le côté réception, des données provenant du côté émission sur les chemins multiples comprend :
la réception, par chacune des premières unités réceptrices, des données provenant du côté émission sur l'un respectif des chemins ;
chacune des premières unités réceptrices étant située dans une station de base ou une cellule d'un système de communication sans fil.

3. Procédé selon la revendication 2, dans lequel la combinaison, par le côté réception, des données reçues sur les chemins multiples comprend :
la fourniture des données reçues, par chacune des premières unités réceptrices, à l'une des premières unités réceptrices sur la transmission de données sur les chemins multiples, ou à la première unité réceptrice sur une connexion principale ; la connexion principale étant une liaison sur laquelle un équipement utilisateur communique avec le côté réseau ; et
la combinaison, par ladite une des premières unités réceptrices, des données reçues en provenance du côté émission avec les données reçues du reste des premières unités réceptrices, à l'exception de ladite une des premières unités réceptrices sur les chemins multiples ; ou,
dans lequel le côté réception comprend une première unité d'interface de données configurée pour combiner des données, la combinaison, par le côté réception, des données reçues sur les chemins multiples, comprenant :
la fourniture des données de réception, par chacune des premières unités réceptrices, à une première unité d'interface de données sur le côté réception ; et
la combinaison, par la première unité d'interface de données, des données reçues en provenance de la pluralité de premières unités réceptrices sur les chemins multiples.

4. Procédé selon la revendication 3, lequel procédé comprenant en outre :
pour un paquet de données contenu dans les données, la réception du paquet de données, par l'une des premières unités réceptrices qui est connectée au côté émission par la connexion principale, ou la première unité d'interface de données, et l'envoi d'une instruction au côté émission pour qu'il arrête la transmission du paquet de données, lorsqu'une partie ou la totalité des conditions suivantes sont satisfaites :
au moins l'une des premières unités réceptrices reçoit correctement le paquet de données du côté émission, ou la première unité d'interface de données détermine que le paquet de données est reçu correctement, après combinaison des données sur les chemins multiples ;
une partie ou la totalité des premières unités réceptrices ont reçu le même paquet de données en provenance du côté émission un nombre de fois tel qu'il atteint le plus grand nombre de transmissions ; et
le paquet de données transmis par le côté émission est reçu avec un retard tel qu'il atteint le délai de transmission le plus long.

5. Procédé selon la revendication 1, dans lequel le côté réception est un côté terminal, et le côté réception comprend une deuxième unité d'interface de données et une deuxième unité réceptrice ;
la réception, par le côté réception, des données provenant du côté émission sur les chemins multiples comprend :
la réception, par la deuxième unité d'interface de données, des données provenant du côté émission sur les chemins multiples ;
la combinaison, par le côté réception, des données reçues sur les chemins multiples comprenant :
la combinaison, par la deuxième unité d'interface de données, des données reçues sur les chemins multiples ; et
après la combinaison, par le côté réception, des données reçues sur les chemins multiples, le procédé comprenant en outre :
la transmission, par la deuxième unité d'interface de données, des données combinées à la deuxième unité réceptrice.

6. Procédé selon la revendication 5, lequel procédé comprenant en outre :
pour un paquet de données contenu dans les données, l'envoi d'une instruction au côté émission, par la deuxième unité d'interface de données ou la deuxième unité réceptrice, pour qu'il arrête la transmission du paquet de données, lorsqu'une partie ou la totalité des conditions suivantes sont satisfaites :
la deuxième unité d'interface de données détermine que le paquet de données est reçu correctement, après la combinaison des données sur les chemins multiples ;
le même paquet de données provenant du côté émission sur l'un des chemins ou la totalité des chemins a été reçu un nombre de fois tel qu'il atteint le plus grand nombre de transmissions ; et
le paquet de données transmis par le côté émission est reçu avec un retard tel qu'il atteint le délai de transmission le plus long.

7. Procédé selon la revendication 5 ou 6, dans lequel :
la deuxième unité d'interface de données et la deuxième unité réceptrice sont situées dans un terminal ; ou
la deuxième unité d'interface de données et la deuxième unité réceptrice sont situées dans différentes entités, et la deuxième unité réceptrice est située dans un terminal.

8. Procédé de communication, comprenant :
la détermination, par un côté émission, du fait que des données doivent être transmises à un côté réception sur des chemins multiples ;
la détermination, par une unité de commande, de la participation de systèmes de communication sans fil à une transmission de données sur les chemins multiples respectifs en fonction d'un délai tel que requis pour un terminal ;
la sélection, par l'unité de commande, des systèmes de communication sans fil qui satisfont au délai pour participer à la transmission de données sur les chemins multiples respectifs ; et
la notification, par l'unité de commande, au côté réception, de la participation des systèmes de communication sans fil à la transmission de données ; et
la transmission des données, par le côté émission, au côté réception sur les chemins multiples respectifs, sur chacun desquels sont transmises les mêmes données.

9. Procédé selon la revendication 8, dans lequel le côté émission est un côté réseau, et le côté émission comprend une pluralité de premières unités émettrices sur une transmission de données sur les chemins multiples ; et
la transmission des données, par le côté émission, au côté réception sur les chemins multiples comprenant :
la transmission des mêmes données, par chacune des premières unités émettrices, au côté réception sur l'un respectif des chemins ;
chacune des premières unités émettrices étant située dans une station de base ou une cellule d'un système de communication sans fil.

10. Procédé selon la revendication 9, dans lequel, avant que le côté émission transmette les données au côté réception sur les chemins multiples, le procédé comprend en outre :
la sauvegarde, par une première unité de traitement de données du côté émission, des données à transmettre, et la transmission d'une pluralité de paquets de données dupliqués obtenus en résultat de la sauvegarde respective dans les premières unités émettrices respectives.

11. Procédé selon la revendication 8, dans lequel le côté émission est un côté terminal, et le côté émission comprend une deuxième unité de traitement de données et une deuxième unité émettrice ;
avant que le côté émission transmette les données au côté réception sur les chemins multiples, le procédé comprend en outre :
la transmission des données à transmettre, par la deuxième unité émettrice, à la deuxième unité de traitement de données ; et
la transmission des données, par le côté émission, au côté réception sur les chemins multiples comprenant :
la sauvegarde, par la deuxième unité de traitement de données, des données reçues pour les chemins multiples, et la transmission d'une pluralité de paquets de données dupliqués obtenus en résultat de la sauvegarde sur le côté réception sur les chemins multiples respectifs.

12. Procédé selon la revendication 11, dans lequel :
la deuxième unité de traitement de données et la deuxième unité émettrice sont situées dans un terminal ; ou
la deuxième unité de traitement de données et la deuxième unité émettrice sont situées dans différentes entités, et la deuxième unité émettrice est située dans un terminal.

13. Procédé selon l'une quelconque des revendications 8 à 12, dans lequel, après que le côté émission a transmis les données au côté réception sur les chemins multiples, le procédé comprend en outre :
l'arrêt, par le côté émission, de la transmission des données sur la totalité des chemins, lors de la réception d'un retour d'informations en provenance du côté réception indiquant que les données sont reçues correctement ou que leur transmission est arrêtée.

14. Unité de commande, comprenant :
un module de détermination de mode de transmission (1200) configuré pour déterminer que des données doivent être transmises sur des chemins multiples entre un côté émission et un côté réception ; et
un module d'instruction (1210) configuré pour donner au côté émission l'instruction de transmettre les données sur les chemins multiples, de telle sorte que le côté émission transmette les mêmes données au côté réception sur les chemins multiples ;
le module de détermination de mode de transmission (1200) étant configuré pour :
si le côté émission est un côté terminal, déterminer que les données doivent être transmises sur des chemins multiples, en fonction des performances du côté émetteur, et/ou d'un service à transmettre ; ou
si le côté réception est le côté terminal, déterminer que les données doivent être transmises sur des chemins multiples, en fonction des performances du côté récepteur, et/ou d'un service à transmettre ;
le module de détermination de mode de transmission (1200) étant en outre configuré pour :
déterminer la participation des systèmes de communication sans fil à la transmission de données sur les chemins multiples respectifs en fonction d'un délai tel que requis pour le côté terminal ;
sélectionner les systèmes de communication sans fil qui satisfont au délai pour participer à la transmission de données sur les chemins multiples respectifs ; et
notifier les systèmes de communication sans fil au côté réception.

15. Unité de commande selon la revendication 14, dans lequel le module d'instruction (1210) est en outre configuré pour :
donner au côté réception l'instruction de recevoir les données sur les chemins multiples, de telle sorte que le côté réception reçoive les mêmes données respectivement sur les différents chemins ; ou
le module d'instruction (1210) est en outre configuré pour :
sélectionner ceux des chemins entre le côté émission et le côté réception qui permettent de respecter les délais requis, en tant que chemins pour la transmission entre le côté émission et le côté réception sur les chemins multiples, et la détermination du côté émission et du côté réception correspondant aux chemins de transmission ; et/ou
l'unité de commande étant située du côté émission ou du côté réception, ou étant une entité d'unité distincte.
